(19) Europäisches Patentamt
European Patent Office
Office européen des brevets

(11) **EP 2 589 020 B1**

(12) **FASCICULE DE BREVET EUROPEEN**

(45) Date de publication et mention
de la délivrance du brevet:
**09.11.2022 Bulletin 2022/45**

(21) Numéro de dépôt: **11738643.3**

(22) Date de dépôt: **29.06.2011**

(51) Classification Internationale des Brevets (IPC):
**G06T 9/00** *(2006.01)*

(52) Classification Coopérative des Brevets (CPC):
**G06T 9/001; G06T 9/004**

(86) Numéro de dépôt international:
**PCT/EP2011/060945**

(87) Numéro de publication internationale:
**WO 2012/001070 (05.01.2012 Gazette 2012/01)**

(54) **PROCÉDÉ DE COMPRESSION / DECOMPRESSION HIÉRARCHIQUE DE MAILLAGE TRIDIMENSIONNEL**

VERFAHREN FÜR DIE HIERARCHISCHE KOMPRIMIERUNG UND DEKOMPRIMIERUNG EINES DREIDIMENSIONALEN MASCHENNETZWERK

METHOD OF HIERARCHICAL COMPRESSION AND DECOMPRESSION OF A THREE DIMENSIONAL MESH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2010 FR 1055211**

(43) Date de publication de la demande:
**08.05.2013 Bulletin 2013/19**

(73) Titulaire: **Fittingbox**
**31670 Labege (FR)**

(72) Inventeurs:
• **MAMMOU, Khaled**
**Thornhill, Ontario L3T7Y6 (CA)**
• **DEHAIS, Christophe**
**31100 Toulouse (FR)**

(74) Mandataire: **Ipside**
**6, Impasse Michel Labrousse**
**31100 Toulouse (FR)**

(56) Documents cités:
• **MAMOU K ET AL: "Shape approximation for efficient progressive mesh compression", IMAGE PROCESSING (ICIP), 2010 17TH IEEE INTERNATIONAL CONFERENCE ON, IEEE, PISCATAWAY, NJ, USA, 26 septembre 2010 (2010-09-26), pages 3425-3428, XP031814533, ISBN: 978-1-4244-7992-4**
• **KHALED MAMOU ET AL: "PTFAN: a multi-resolution extension for the TFAN codec", 91. MPEG MEETING; 18-1-2010 - 22-1-2010; KYOTO; (MOTION PICTURE EXPERT GROUP OR ISO/IEC JTC1/SC29/WG11),, 16 janvier 2010 (2010-01-16), XP030045768,**
• **MAO ZHIHONG ET AL: "A Modified Laplacian Smoothing Approach with Mesh Saliency", 1 janvier 2006 (2006-01-01), SMART GRAPHICS LECTURE NOTES IN COMPUTER SCIENCE;;LNCS, SPRINGER, BERLIN, DE, PAGE(S) 105 - 113, XP019041505, ISBN: 978-3-540-36293-7 page 107, colonne de gauche section 4, Modified laplacian smoothing with mesh saliency; page 108 - page 109**
• **ZHI-QUAN CHENG, SHI-YAO JIN, HUA-FENG LIU: "Anchors-based lossless compression of progressive triangle meshes", PROCEEDINGS OF PACIFIC GRAPHICS 2006, 2006, pages 45-50, XP002624295, TAIBEI, TAIWAN**

- LEE, C. H. VARSHNEY, A. JACOBS, D. W.: "Mesh saliency", ACM TRANSACTIONS ON GRAPHICS, vol. 24, 2005, pages 659-666, XP002624296,
- ZHAO H ET AL: "Triangular surface mesh fairing via Gaussian curvature flow", JOURNAL OF COMPUTATIONAL AND APPLIED MATHEMATICS, AMSTERDAM, NL, vol. 195, no. 1-2, 15 octobre 2006 (2006-10-15), pages 300-311, XP024932969, ISSN: 0377-0427, DOI: DOI:10.1016/J.CAM.2005.03.094 [extrait le 2006-10-15]
- ZHONG LI ET AL: "A new feature-preserving mesh-smoothing algorithm", THE VISUAL COMPUTER ; INTERNATIONAL JOURNAL OF COMPUTER GRAPHICS, SPRINGER, BERLIN, DE, vol. 25, no. 2, 15 février 2008 (2008-02-15), pages 139-148, XP019711674, ISSN: 1432-2315
- NEALEN ET AL: "Laplacian mesh optimization", PROCEEDINGS OF THE 4TH INTERNATIONAL CONFERENCE ON COMPUTER GRAPHICS AND INTERACTIVE TECHNIQUES IN AUSTRALASIA AND SOUTHEAST ASIA, 29 novembre 2006 (2006-11-29), pages 381-389, XP002624297,
- European Patent Office: "EPO - EPO and IEC agree to cooperate on standards and patents", , 17 April 2013 (2013-04-17), XP55413366, Retrieved from the Internet: URL:https://www.epo.org/news-issues/news/2 013/20130417.html [retrieved on 2017-10-06]
- ANONY: "ISO/IEC JTC1 N3348: Final Text of ISO/IEC JTC1 Directives: Procedures for the technical work of ISO/IEC JTC 1 on Information Technology (Third Edition)", 19941220, PAGE(S) 1 - 95 , 20 December 1994 (1994-12-20), XP007921827, Retrieved from the Internet: URL:http://isotc.iso.org/livelink/livelink ?func=ll &objId=6721404&objAction=browse&so rt=name
- ISO/IEC/JTC1 WG11: "Kyoto Meeting -Document Register", , 22 January 2010 (2010-01-22), XP55413560, Retrieved from the Internet: URL:http://wg11.sc29.org [retrieved on 2017-10-09]
- KOBBELT L ET AL: "A GENERAL FRAMEWORK FOR MESH DECIMATION", PROCEEDINGS GRAPHICS INTERFACE '98. VANCOUVER, BC, JUNE 18 - 20, 1998; [GRAPHICS INTERFACE], TORONTO : CIPS, CA, vol. CONF. 24, 18 June 1998 (1998-06-18), pages 43-50, XP001064700, ISBN: 978-0-9695338-7-0
- Mohammad Hussain ET AL: "Efficient and feature-preserving triangular mesh decimation", , 2 February 2004 (2004-02-02), XP55608834, Retrieved from the Internet: URL:https://epo.summon.serialssolutions.co m/2.0.0/link/0/eLvHCXMwlV2xbglxDLVAt7AgKp B oC1KGjkQcd4Fc1KlCQAcmdAtTlAsJPaFepVlW vh47B 0LqxpzEthQnduz4GeANjeLEzKzkMjGSC-UTrm QR80x IsS-UUemO4pDbuchXcrMS6wbcWtb9gxdA25R Mx0gOH -UR2Zq77ikqyQw4ugRKxmeKMH6b51vDoWAel h1oX_0 69IFvxBM0XNWF90UAaMB7nSE35I1A0eT095SO aLVn1 DSjom7wv-z [retrieved on 2019-07-25]
- Oliver Matias Van Kaick ET AL: "A Comparative Evaluation of Metrics for Fast Mesh Simplification", Computer Graphics Forum, vol. 25, no. 2, 22 June 2006 (2006-06-22), pages 197-210, XP55608837, GB ISSN: 0167-7055, DOI: 10.1111/j.1467-8659.2006.00935.x

## Description

La présente invention relève du domaine du traitement d'images. Elle concerne plus particulièrement les procédés de compression et de décompression d'image nécessaires à leur transmission minimisant la bande passante nécessaire.

## Contexte de l'invention et problèmes posés

Les dernières années ont vu une explosion du nombre d'applications logicielles utilisant des images 3D : jeux vidéo en ligne, télémédecine, systèmes d'information géographique, etc. Le traitement de ces applications est rendu possible par la généralisation de processeurs graphiques de plus en plus rapides, ainsi que par l'apparition d'outils puissants de modélisation en trois dimensions et de dispositifs de captation directe de formes tridimensionnelles d'objets. Les contenus 3D générés sont ainsi de plus en plus riches et détaillés.

Ces contenus sont généralement définis par un ensemble de points ou sommets **("vertex")** connectés sous forme de **facettes**, elles-mêmes délimitées par des **arêtes ("edges").** Un tel arrangement est dénommé **maillage** $M$ **("mesh"** en langue anglaise).

Vis-à-vis de ces données dont le volume évolue rapidement avec les nouvelles applications des images 3D, les réseaux de transmission d'information restent extrêmement hétérogènes et leur bande passante, quoique croissante, est faible au regard du nombre et du volume des fichiers qui doivent être transmis sur ces réseaux. Enfin, les plateformes destinées à recevoir des images d'objets tridimensionnels sont de plus en plus variées : téléphones mobiles, tablettes, micro-ordinateurs, assistants personnels etc.

On comprend donc que l'échange efficace de modèles tridimensionnels complexes sur ces réseaux et ces machines devient un enjeu crucial pour de nombreuses applications industrielles, dont par exemple le rendu photoréaliste, la visualisation médicale, et la simulation.

Par ailleurs, certaines applications utilisant des modèles tridimensionnels, notamment dans le domaine médical et l'ingénierie, exigent une récupération sans perte de la **connectivité** (i.e. pas de re-maillage) du maillage $M$ et un contrôle précis de l'erreur maximale ou moyenne induite par la compression de sa géométrie (i.e. positions et attributs associés aux sommets de $M$).

Ces considérations expliquent le besoin de procédés de compression de maillages tri-dimensionnels efficaces, adaptés particulièrement à des maillages très denses, avec un encodage du maillage $M$ sans re-maillage et quasiment sans perte d'information (**"near-lossless"** en langue anglaise), tout en fournissant des fonctions avancées telles que l'évolutivité (**"scalability"** en langue anglaise) spatiale et en qualité.

On définit ici **l'évolutivité spatiale** comme la capacité à adapter la résolution du maillage $M$ aux performances de rendu du terminal de restitution de l'image et à la bande passante disponible pour la transmission.

De même, **l'évolutivité en qualité** est définie comme la capacité à raffiner progressivement la précision des attributs et des coordonnées, au fur et à mesure que le flux de données est décodé.

On rappelle que le codage de connectivité est dit sans perte s'il préserve la triangulation initiale du maillage $M$ original.

Plusieurs techniques sont déjà connues dans le domaine de la compression de maillage tridimensionnel.

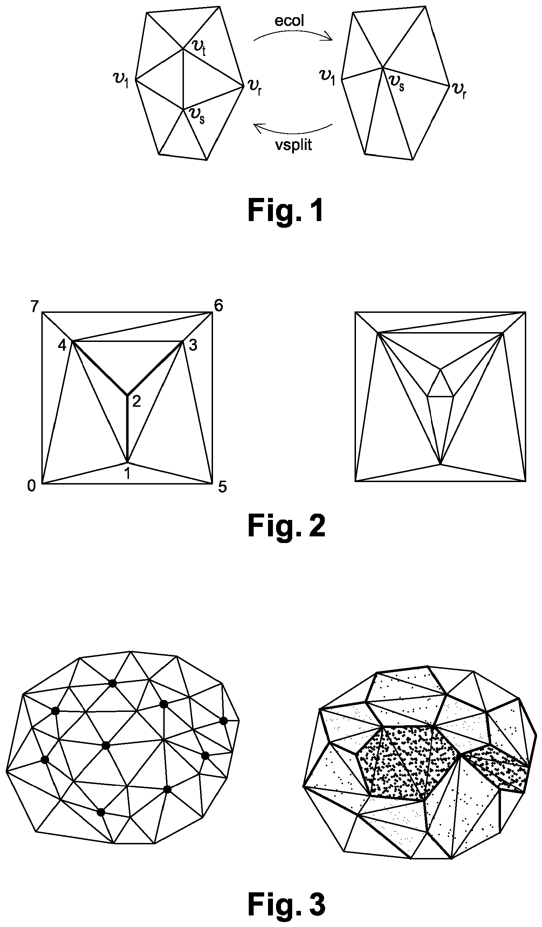

Parmi celles-ci, on peut citer en particulier le procédé de maillage progressif ("progressive mesh" ou **PM** en langue anglaise) [Hoppe'96] (Hugues Hoppe, « Progressive meshes », International Conférence on Computer Graphics and Interactive Techniques, 99-108, 1996). Dans celui-ci, illustré par la figure 1, le maillage $M$ évolue par division d'un sommet en deux sommets ou fusion de deux sommets en un seul, et la modification conjointe des arêtes et facettes associées (ajout ou suppression de deux facettes). Ce procédé permet de générer un ensemble de maillages intermédiaires appelés niveaux de détail (en langue anglaise Level of Details, LoD). Cette représentation est adaptée à une transmission progressive du modèle 3D ainsi qu'au rendu selon le point de vue (an langue anglaise « View dépendent rendering »).

Cependant, les performances en compression de ce procédé sont limitées, et il ne s'applique qu'à des variétés orientées (« Oriented manifold » en anglais).

Dans un autre procédé connu sous le nom Progressive Forest Split (**PFS**) [Taubin'98] (G. Taubin,, A. Guéziec, W. Horn, F. Lazarus, « Progressive forest split compression », International Conférence on Computer Graphics and Interactive Techniques, 123-132, 1998), le maillage est raffiné en appliquant simultanément des opérations de division à un ensemble de sommets du maillage. Dans l'exemple illustré par la figure 2, un sommet est remplacé par un ensemble de trois sommets et quatre facettes nouvelles sont générées en conséquence. En regroupant les opérations de division de sommets, l'approche PFS permet de les coder de façon plus compacte au prix d'une granularité de niveaux de détails plus grossière. Ici encore, on atteint une transmission et un rendu progressif. La performance en compression est meilleure que l'algorithme de maillage progressif PM, mais la qualité des niveaux de détails des modèles intermédiaires est plus faible.

Une autre stratégie est connue sous le nom de colorisation de facettes ("Patch Coloring" **PC**) [Cohen-Or'99] (D. Cohen-Or, D. Levin, O. Remez , « Progressive Compression of Arbitrary Triangular Meshes », IEEE Visualization Conférence Proceedings, 67-72, 1999.). Dans ce procédé, on utilise une stratégie de simplification de facettes illustrée par la figure 3. Ce procédé offre de bonnes performances de compression et il est applicable à tous types de maillages. Cependant, ici encore la qualité des niveaux de détails des modèles intermédiaires est sous-optimale.

Encore une autre stratégie de simplification est connue sous le nom de méthode de décimation guidée par les valences ("Valence-based decimation approach") [Alliez'01] (P. Alliez, M. Desbrun, « Progressive encoding for lossless transmission of 3D meshes », ACM Siggraph Conférence Proceedings, 198-205, 2001). Dans cette approche, la stratégie de décimation des sommets exploite la connectivité des sommets, afin de minimiser, à chaque niveau de détails intermédiaire, la dispersion de la valence des sommets autour de la valeur six. Les performances en compression de cette méthode sont bonnes, mais elle génère des niveaux de détails de mauvaise qualité dans le cas de maillages échantillonnés de manière irrégulière. De plus, son application est limitée à des maillages particuliers dits variétés orientées.

On peut encore citer la compression par structure d'octree [Peng'05] (J. Peng, C.-C. J. Kuo, « Geometry-guided progressive lossless 3D mesh coding with octree (OT) décomposition », ACM Transactions on Graphics, Vol. 24(3), 609-616, 2005.) qui offre de bonnes performances de compression et qui est applicable à tout type de maillages. Cependant, cette méthode fournit des niveaux de détails de faible qualité dans le cas de maillages 3D lisses.

Enfin, le codage spectral [Karni'01] (Z. Karni, C. Gotsman, « Spectral compression of mesh geometry », International Conférence on Computer Graphics and Interactive Techniques, 279-286, 2000) compresse en mono-résolution (de l'anglais "single rate") la connectivité du maillage. Cette information est ensuite exploitée afin de décomposer le signal de géométrie selon une base de fonctions adaptées au maillage. Les performances de compression du codage spectrale sont bonnes dans le cas de maillages 3D lisses. Cependant, sa complexité de calcul est élevée. De plus, ce procédé supporte uniquement une évolutivité en qualité (capacité à raffiner progressivement la précision des attributs et coordonnées, au fur et à mesure que le flux de données est décodé).

En résumé, les techniques de compression exploitant la connectivité (i.e. PFS, PC et codage à base de valence) permettent des gains en compression par rapport à l'approche originale de maillage progressif au prix de niveaux de détails intermédiaires de qualité sous-optimale, La compression par structures d'octree utilise un critère de simplification qui n'est pas adapté aux maillages. Enfin, le codage spectral est complexe et ne permet pas une évolutivité spatiale.

Dans [Karni'01], les auteurs proposent d'exploiter la technique de Touma et Gotsman (TG) [Touma'98] (C.Touma, C. Gotsman, « Triangle Mesh Compression », International Conférence on Graphics Interface, 24-34, 1998) afin de coder en mono-résolution (i.e. pas d'évolutivité) l'information de connectivité. Le codeur TG code la connectivité du maillage sous forme d'une séquence de valences. Ce codeur gère des variétés orientées. L'approche TFAN [Mammou'09] (K. Mamou, T. Zaharia, F. Prêteux, « TFAN: A low complexity 3D mesh compression algorithm », Computer Animation and Virtual Worlds, Vol. 20(2-3), 343-354,2009) généralise la technique TG à tout type de maillages 3D.

D'autres exemples peuvent être consultés dans les publications suivantes :

- M. Zhihong et al., « A modified Laplacian Smoothing Approach with Mesh Saliency », Smart Graphics, Lecture Notes in Computer Science, vol 4073, pp 105-113, 2006 ;
- H. Zhao et al., « Triangular surface mesh fairing via Gaussian curvature flow », Journal of Computationnal and Applied Mathematics, 195, pp 300-311, 2006 ;
- K. Mamou et al., « PTFAN: a multi-resolution extension for the TFAN codec », ISO/IEC JTC1/SC29/WG11, 2010.

**Objectifs de l'invention**

L'objectif de la présente invention est alors de proposer un procédé de compression permettant une évolutivité spatiale et en qualité, avec un codage sans perte de connectivité générique (i.e. variétés ou non, orientées ou non, ouvertes et fermées) et un codage quasiment sans perte (avec un taux d'erreur maximale/moyenne contrôlée) de la géométrie du maillage.

**Exposé de l'invention**

A cet effet, l'invention vise sous un premier aspect un procédé de codage selon la revendication 1

Avantageusement, on choisit comme valeurs $\alpha=100$ et $\beta=1$.

Selon une mise en œuvre particulière, la hiérarchie de maillage progressif PM$(M^*)$, est générée par décimation itérative du maillage approximé $M^*$ en n'autorisant que des opérations réversibles de contraction de demi-arêtes, jusqu'à aboutir à un maillage de base $M_0$, le maillage original $M$ étant alors construit comme le maillage de base $M_0$ associé à un ensemble d'opérations de raffinement par des divisions de sommets.

L'invention vise sous encore d'autres aspects un encodeur selon la revendication 4 et un décodeur selon la revendication 5.

**Brève description des figures**

La description qui va suivre, donnée uniquement à titre d'exemple d'un mode de réalisation de l'invention, est faite en se référant aux figures annexées qui représentent :

Figure 1 (déjà citée) : une représentation schématique d'un procédé de maillage progressif,
Figure 2 (également déjà citée) : une représentation schématique d'un procédé de maillage de type "Progressive Forest Split",
Figure 3 (également déjà citée) : une représentation schématique d'un procédé de maillage de type "Patch Coloring",
Figure 4 : un logigramme représentant un encodeur selon l'invention,
Figure 5 : un logigramme représentant un décodeur selon l'invention,
Figures 6 et 7 : des familles de courbes mettant en évidence le gain permis par l'utilisation d'un procédé selon l'invention,
Figure 8 : une représentation schématique des erreurs de prédiction entre le maillage original et le maillage approximé,
Figure 9 : un schéma de principe d'une variante de procédé utilisant des niveaux de détails intermédiaires de connectivité.

Le procédé tel que décrit est destiné à être mis en œuvre par des moyens électroniques, que ce soit sous forme d'un composant dédié ou sous forme de logiciel exécuté par un processeur d'ordinateur de type classique connu de l'homme du métier.

On considère un maillage $M$ destiné, dans le présent exemple, à permettre la représentation d'un personnage. Le procédé est ici appliqué à des maillages statiques ou à des trames particulières d'une séquence de maillages animés.

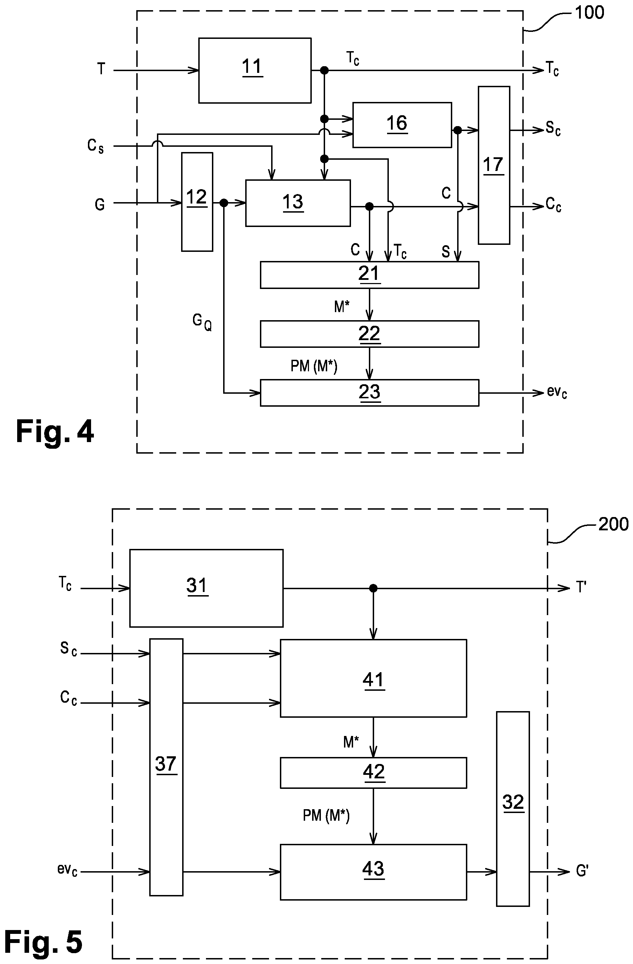

La figure 4 illustre les éléments logiques composant un encodeur 100 correspondant à une mise en œuvre non limitative de l'invention.

Trois types de données servent d'entrée à l'encodeur 100 :

- des données de connectivité T,
- des données de géométrie G,
- et éventuellement des références de "points de contrôle" Cs sélectionnées par l'utilisateur (ces points permettent de générer une version approximée du maillage original M).

Conformément au procédé décrit ici à titre d'exemple non limitatif, les données de connectivité T sont encodées en utilisant un encodeur de connectivité 11 de type mono-résolution, connu de l'homme du métier et non détaillé ici. Il en résulte des données de connectivité compressées $Tc$.

Les données de géométrie G sont traitées dans un module de quantification 12 ("quantization"). Le but de ce module de quantification est de réduire le volume d'informations à transmettre en diminuant le nombre de bits par sommet.

Puis les données de géométrie quantifiées $G_Q$ issues de ce module de quantification 12, ainsi que les données de connectivité compressées $Tc$ fournies par l'encodeur de connectivité 11 et les données de points de contrôle Cs sont traitées dans un module de sélection de points de contrôle 13 pour fournir des points de contrôle sélectionnés C.

Les données de connectivité compressées $Tc$ et les données de géométrie G sont fournies à un module de détection des arêtes saillantes 16, dont les résultats sont compressés au sein d'un encodeur arithmétique 17 pour produire les indices des arêtes saillantes compressés $S_C$.

De même, les points de contrôle sélectionnés C sont compressés par ce même encodeur arithmétique 17 pour fournir les indices et positions compressés des points de contrôle $C_C$.

Un module d'approximation de maillage 21 intègre les données de points de contrôle sélectionnés C et de données de connectivité compressées $Tc$. Ce module d'approximation de maillage 21 génère un maillage approximé $M^*$.

Le maillage approximé $M^*$ alimente un module de décimation de maillage 22. Les données de géométrie quantifiées $G_Q$ ainsi que le maillage progressif $PM(M^*)$ issu du module 22 servent d'entrée à un module de prédiction 23 des erreurs d'approximation $e_v$, dont sont issues après compression par un encodeur arithmétique (non illustré sur la figure 4) des données compressées de prédiction d'erreurs $e_{vc}$.

On comprend que quatre types de données sont fournis en sortie de l'encodeur 100 :

- des données de connectivité compressées $Tc$,
- des indices des arêtes saillantes compressés $S_C$,
- des indices et positions compressés des points de contrôle $C_C$,
- et des données de prédiction d'erreurs de compression $e_{vc}$.

Ces données sont transmises au fur et à mesure par un réseau de communication de type connu de l'homme de l'art, et non détaillé ici. Ce réseau de communication sort en tant que tel du cadre de l'invention.

La figure 5 illustre alors les éléments logiques constituant un décodeur 200 selon l'invention.

Ses données d'entrée sont les données de sortie de l'encodeur 100.

Les données de connectivité compressées $Tc$ sont traitées dans un décodeur de connectivité mono-résolution 31, qui fournit des données de connectivité reconstituées $T'$. On note que $T'$ est identique à T à une permutation des sommets et des facettes de $M$ près.

Les indices des arêtes saillantes compressés $S_C$, les indices et positions compressés des points de contrôle $C_C$, et les données compressées de prédiction d'erreurs $e_{vc}$ sont traitées par un décodeur arithmétique 37 ce qui fournit des indices des arêtes saillantes S', des indices et positions des points de contrôle C', et des données de prédiction d'erreurs de compression $e_v'$.

Les données de connectivité reconstituées T' sont combinées aux indices des arêtes saillantes S', et aux indices et positions des points de contrôle C', dans un module d'approximation de maillage 41. Celui-ci fournit un maillage approximé $M^*$ qui alimente un module de décimation de maillage 42.

Les données $PM(M^*)$ issues du module de décimation de maillage 42 sont à leur tour combinées aux données de prédiction d'erreurs de compression $ev'$ dans un module de prédiction inverse d'erreurs d'approximation 43. Un module de quantification inverse 32 fournit finalement en sortie, sur la base des résultats du module de prédiction inverse d'erreurs d'approximation, des données de géométrie reconstituées G'.

Les données de sortie du décodeur 200 sont donc les données de connectivité reconstituées $T'$ et les données de géométrie reconstituées G'.

**Mode de fonctionnement**

Le procédé de compression-décompression selon l'invention tire profit du fait que l'information de connectivité T représente moins de 20% du flux complet de données compressées représentant le maillage $M$. De ce fait, il compresse cette information de connectivité T en mono-résolution en utilisant l'encodeur de connectivité 11. La connectivité $Tc$ du maillage $M$, encodée sans perte, est alors utilisée pour compresser de façon évolutive l'information de géométrie G.

Plus précisément, le procédé, tel que décrit ici, exploite la connectivité $T$ du maillage de manière à dériver une approximation lisse $M^*$ du maillage original $M$.

Cette approximation lisse $M^*$ est entièrement décrite par les trois entrées du module d'approximation de maillage 21, à savoir :

a. l'information de connectivité encodée $Tc$ (c'est à dire la liste des triangles du maillage M),
b. un petit nombre $N$ de **points de contrôle** $C = (c_k)_{k \in \{1...N\}}$, et
c. un ensemble d'indices (c'est-à-dire leurs références dans le maillage) S d'arêtes dites **arêtes saillantes** du maillage $M$ (voir définition plus loin).

Rappelons que les points de contrôle sont choisis par l'utilisateur et/ou par une procédure automatique afin d'assurer que le maillage approximé $M^*$ soit le plus fidèle possible au maillage original $M$.

Plusieurs stratégies automatiques peuvent être adoptées afin de choisir l'ensemble des points de contrôle. A titre d'exemple de mise en œuvre, si aucun point de contrôle n'est fourni par l'utilisateur on choisi un premier point de contrôle au hasard. On approximé le maillage en utilisant les points de contrôle déjà définis (i.e. soit les points de contrôle définis par l'utilisateur soit le point de contrôle choisi au hasard). De façon itérative, de nouveaux points de contrôle sont ensuite sélectionné. Plus précisément, le sommet présentant une erreur d'approximation maximale est sélectionné à chaque itération. Ce processus est réitéré jusqu'à atteindre le nombre de points de contrôle souhaité. Il s'agit d'un paramètre de codage, qui est générale de l'ordre de 1-3% du nombre de sommets du maillage original $M$.

Le présent procédé de codage-décodage utilise, dans ce module d'approximation de maillage 21, une technique d'approximation de maillage par laplacien, connue en soi et décrite notamment dans [Chen'05] (D. Chen, D. Cohen-Or, O. Sorkine, and S. Toledo, "Algebraic analysis of high-pass quantization," ACM Transactions on Graphics, vol. 24, pp. 1259-1282, 2005).

Cette technique est ici généralisée au cas de maillages comportant des arêtes saillantes. On définit une matrice laplacienne $L$ comme suit :

$$\forall (i,j) \in \{1,\dots, V+C\} \times \{1,\dots, V\}, L_{i,j} = \begin{cases} 1 & si\ (j=i) \\ -\dfrac{\alpha}{\alpha|i_s^*|+\beta|i_n^*|} & si\ (i \le V)\ et\ (j \in i_s^*) \\ -\dfrac{\beta}{\alpha|i_s^*|+\beta|i_n^*|} & si\ (i \le V)\ et\ (j \in i_n^*) \\ 1 & si\ (j \in C) \\ 0 & autrement \end{cases} \tag{1}$$

dans laquelle :

- $i_s^*$ est l'ensemble des **voisins topologiques** spéciaux du sommet $i$, définis comme partageant avec lui soit une arête de bord (c'est à dire adjacente à exactement un triangle), soit une arête saillante,
- $i_n^*$ est l'ensemble des voisins topologiques "normaux" du sommet i définis comme les voisins topologiques n'appartenant pas à $i_s^*$,
- $|i_n^*|$ et $|i_s^*|$ désignent les nombres d'éléments de $i_n^*$ et $i_s^*$ respectivement,
- $\alpha$ et $\beta$ sont des **poids** respectivement associés aux arêtes spéciales (saillantes ou de bordure) et aux arêtes non spéciales. Il est à noter que si les poids $\alpha$ et $\beta$ sont égaux, ou si il n'y a pas d'arêtes saillantes, on obtient exactement la définition de la matrice laplacienne proposée par [Chen'05]. Dans le cas de maillage avec arêtes saillantes, les poids $\alpha$ et $\beta$ permettent de pondérer de façons différentes la contribution des sommets voisins selon leur appartenance aux deux ensembles $i_s^*$ et $i_n^*$.

Dans le présent exemple de mise en œuvre, un choix envisagé est de fixer a=100 et $\beta$=1. Ceci implique qu'un sommet i situé sur un bord du maillage ou sur une arête saillante est cent fois plus influencé par ses voisins spéciaux $i_s^*$ que par ses voisins non spéciaux $i_n^*$.

Différentes procédures peuvent être envisagées pour la détection d'arêtes saillantes. Une solution possible est de définir comme **arêtes saillantes** toutes les arêtes présentant un angle de dièdre plus grand qu'une valeur seuil prédéterminée (par exemple $\pi/6$). Ces arrêtes résultent en général des discontinuités tangentielles de la surface. La technique [Chen'05] ne gère pas de façon efficace ce type de surfaces, étant donné que les arrêtes saillantes sont lissées. Le procédé ici proposé permet en revanche de mieux conserver ces caractéristiques.

Comme dans [Chen'05], la matrice de taille (V x 3) des positions approximées des sommets, notée

$$P^* = \left(P_v^*(k)\right)_{v \in \{1,\dots,V\}}^{k \in \{1,2,3\}},$$

est calculée en résolvant le système linéaire suivant :

$$(L^T L)P^* = B. \tag{2}$$

La matrice $B$ de dimension ($V \times 3$) est donnée par :

$$B_{i,k} = \begin{cases} P_i(k) & si\ (i \in C) \\ 0 & autrement \end{cases} \tag{3}$$

où $P_i(1)$, $P_i(2)$ et $P_i(3)$ représentent respectivement les coordonnées cartésiennes originelles x, y and z du sommet i.

Une **hiérarchie de maillage progressif,** notée PM$(M^*)$, est alors générée par décimation du maillage approximé $M^*$ en n'autorisant que des opérations de contraction de demi-arêtes (en langue anglaise « Half-edge collapse »). La technique de maillage progressif PM (déjà citée et illustrée par la figure 1), représente le maillage original $M$ comme un maillage de base $M_0$ associé à un ensemble d'opérations de raffinement par des divisions de sommets.

Le maillage de base $M_0$ est obtenu par décimation successive du maillage $M$ par des opérations de contraction d'arêtes. Le choix de la séquence d'opérations de contraction d'arêtes à appliquer au maillage $M$ est guidé par une stratégie de préservation de forme.

Plus précisément, selon cette stratégie, à chaque étape du processus de décimation, une fonction de coût de l'application de chaque opération de contraction d'arête est évaluée de façon à choisir l'opération qui introduit la plus faible distorsion de forme comme décrit dans [Garland'97] (M. Garland, P. Heckbert. «Surface Simplification Using Quadric Error Metrics», International Conférence on Computer Graphics and Interactive Techniques, 209-216, 1997).

Comme discuté dans [Popovic'97] (J. Popovic, H. Hoppe, «Progressive simplicial complexes», ACM SIGGRAPH Conférence, 217-224, 1997.), chaque opération de contraction d'arête est réversible à condition de stocker :

- l'indexe du sommet à diviser,
- sa position et ses attributs, ainsi que
- les modifications opérer sur les triangles/arrêtes qui lui sont incidentes topologiquement.

En exploitant ce fait, un ensemble d'opérations de raffinement, noté $(vsplit_i)_{\in\{1,...,k\}}$ ($K$ étant le nombre de niveaux de détails dans la hiérarchie de maillage, i.e. $M=M_K$) peut être calculé et exploité pour régénérer progressivement le maillage $M$ en partant du maillage de base $M_0$. Plus précisément, en appliquant l'opération $vsplit_1$ à $M_0$, on obtient le niveau de détail $M_1$. En appliquant $vsplit_2$ à $M_1$ on obtient $M_2$. Ainsi de suite jusqu'à reconstruire le maillage original $M$. A chaque étape $l \in \{1,..., K\}$ de ce processus de raffinement un nouveau sommet $v,(l)$ est rajouté au niveau de détail $M_{l-1}$ et le voisinage du sommet $v_s(l)$ est modifié (cf. figure 1). L'ordre d'insertion des sommets $v_t(l)$ est appelé ordre du maillage progressif. Notons que la liste des voisins du sommet $v_s(l)$ change entre les deux niveaux de détails $M_{l-1}$ et $M_l$ (cf. figure 1). Dans ce qui suit on parlera de voisins topologiques d'un sommet par rapport à un niveau de détail $l$.

Le procédé proposé construit la hiérarchie de maillage progressif $PM(M^*)$ en considérant $M^*$ (et non M). Ce choix est motivé par le fait que seule cette information est à la fois disponible au codeur 100 et au décodeur 200. Le maillage progressif $PM(M^*)$ est ensuite exploité de manière à calculer une prédiction des erreurs d'approximation de $M^*$ par rapport à $M$. L'encodeur tel que décrit compresse les erreurs d'approximation prédites dans l'ordre inverse de $PM(M^*)$.

À chaque étape, l'erreur d'approximation prédite $e_v$ associée au sommet $v$ est calculée comme suit :

$$e_v := \left( P_v - \frac{1}{v^*}\sum_{w\in v^*} \tilde{P}_w \right) - \left( P_v^* - \frac{1}{v^*}\sum_{w\in v^*} P_w^* \right), \qquad (4)$$

dans laquelle $v^*$ représente l'ensemble des voisins topologiques de $v$ dans le **niveau de détail courant** de PM$(M^*)$, et $(\tilde{P}_w)_{w\in v}$, sont les positions reconstruites par le décodeur 200 comme décrit ci-dessous (voir équation (7)).

L'erreur d'approximation $e_v$ obtenue est alors décomposée en une composante normale au maillage $M^*$ $e_v^n$ et deux composantes tangentielles $e_v^t$ et $e_v^r$ définies par:

$$e_v^n = e_v \cdot n_v^*, \quad e_v^t = e_v \cdot t_v^*, \quad e_v^r = e_v \cdot r_v^*, \qquad (5)$$

où $n_v^*$ est la normale du maillage M$^*$ au sommet $v$, et $r$ et $t$ sont deux vecteurs choisis pour former une base orthonormale directe avec $n_v^*$.

Finalement, $e_v^n$, $e_v^t$ et $e_v^r$ sont quantifiées et encodées arithmétiquement pour tous les sommets $v$ du maillage. Les erreurs d'approximation compressées, notées $e_{vc}$, sont ensuite transmises de façon progressive au décodeur 200.

Le décodeur 200 décompresse progressivement les erreurs d'approximation prédites à partir du niveau de détail le plus bas (i.e. $M_0$) vers le niveau de détail le plus élevé (i.e. $M_K$). Ici, à chaque étape, les trois composantes $e_v^n$, $e_v^t$ et $e_v^r$ sont arithmétiquement décodées (dans le module 37) et puis utilisées (dans le module 43) pour reconstruire l'erreur d'approximation comme suit :

$$\hat{e}_v = \hat{e}_v^n \cdot \hat{n}_v^* + \hat{e}_v^t \cdot \hat{t}_v^* + \hat{e}_v^r \cdot \hat{r}_v^* \qquad (6)$$

Finalement, les positions décodées (c'est-à-dire la géométrie reconstituée G) sont données par :

$$\tilde{P}_v = \hat{e}_v + \frac{1}{v^*}\sum_{w\in v}\tilde{P}_w + (P_v^* - \frac{1}{v^*}\sum_{w\in v}P_w^*) \qquad (7)$$

Il est à noter qu'en encodant et décodant les sommets en ordre inverse de la hiérarchie progressive de maillage PM*(M\*)*, le présent procédé d'encodage / décodage garantit que lors du traitement du sommet v, les positions de tous ses voisins ont déjà été reconstruites.

Par ailleurs, en utilisant la structure maillage progressif PM*(M\*)*, le codeur/décodeur tel que décrit ici permet directement d'assurer la fonctionnalité d'évolutivité spatiale (capacité à adapter la résolution du maillage $M$ aux performances de rendu du terminal de restitution de l'image et à la bande passante disponible pour la transmission).

L'évolutivité spatiale est assurée en exploitant la structure de maillage progressif *PM(M\*)* et le fait que les maillages $M$ et $M^*$ ont la même connectivité.

Grâce à cette dernière propriété, les opérations $(vsplit_l)_{l\in\{1,\dots,K\}}$ sont calculées sur $M^*$ et appliquées à $M$. Le décodeur procède comme suit. Tout d'abord, M\* est simplifié comme décrit précédemment afin de générer *PM(M\*) avec un* maillage de base qui contient un seul sommet $v_0$ (dans le cas général un sommet par composante connexe). La position de $v_0$ est directement décodée en appliquant l'équation (7) et en supposant que $v_0^*$ est vide (i.e. pas de voisin). Ensuite, l'opération $vsplit_1$ est appliquée. La position du nouveau sommet inséré $v_1$ est reconstruite grâce à l'équation (7) et en considérant son voisinage topologique dans $M_1^*$. Ce processus est réitéré pour tous les sommets restant jusqu'à décodage de tout le maillage ou lorsqu'un seuil de qualité prédéfini est atteint.

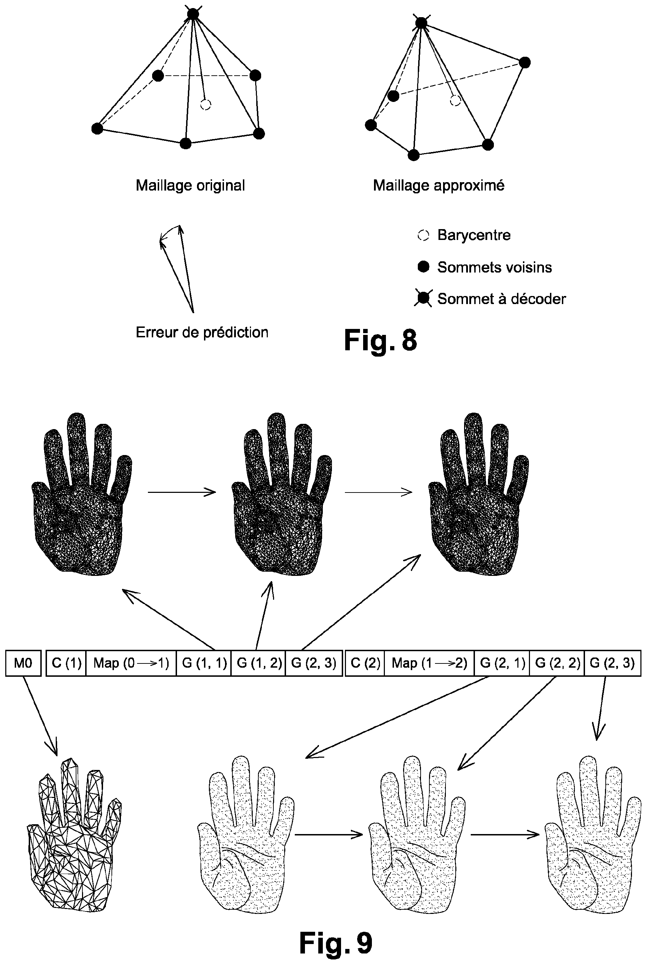

L'évolutivité en qualité (raffinage progressif des positions au fur et à mesure du décodage du flux) est obtenue en reconstruisant les positions de tous les sommets, tout en fixant dans l'équation (7) à zéro les erreurs d'approximation prédites non encore disponibles. Au début du processus de décodage, aucune de ces erreurs de prédiction n'est disponible. En supposant ces erreurs nulles, le décodeur fait l'hypothèse que chaque sommet à décoder subi le même déplacement que celui calculé sur le maillage approximé $M^*$ (voir figure 8). Bien sûr une telle hypothèse introduit des erreurs de reconstruction. Au fur et à mesure du l'interprétation du flux binaire, les erreurs de prédiction sont décodées et exploitées (i.e. en appliquant l'équation (7)) afin de corriger progressivement les positions des sommets du maillage. A la fin de la transmission, toutes les positions ont été corrigées. A ce stade, seules les erreurs de quantification demeurent.

## Avantages de l'invention

On comprend que le procédé selon l'invention transfère, du codeur vers le décodeur, une partie du calcul de géométrie du maillage, ce qui permet notamment une économie en bande passante. Le décodeur gère la simplification du maillage.

Une idée clé du procédé est d'approximer l'objet par une faible proportion (typiquement 1-3%) de points du maillage définis comme des points de contrôle.

Dans l'art antérieur, l'approximation de maillage par approche laplacienne repose sur un critère qui ramène chaque sommet le plus proche possible du barycentre de ses voisins. Cette pondération uniforme des contributions des voisins a pour inconvénient de lisser les formes saillantes. Dans le présent procédé, on utilise un barycentre pondéré des arêtes saillantes, ce qui retranscrit plus fidèlement la forme du modèle.

Tel qu'il a été décrit, le procédé de compression de maillage 3D multi-résolution utilise une stratégie basée sur une approximation de forme, de manière à compresser et transmettre progressivement l'information de géométrie, qui représente environ 80% du volume total d'informations à transmettre.

Cette stratégie permet en même temps un encodage sans perte de la connectivité, une compression quasiment sans perte de la géométrie et des attributs, et des évolutivités spatiale et en qualité.

Pour donner un ordre de grandeur des gains, la géométrie du maillage $M$ définie par la position de chaque sommet est usuellement codée sur 15 à 20 **bpv** ("bits per vertex"), et la connectivité entre sommets, c'est-à-dire la liste des facettes, représente 1 à 4 bpv, soit moins de 20% du flux total de données représentant le maillage $M$.

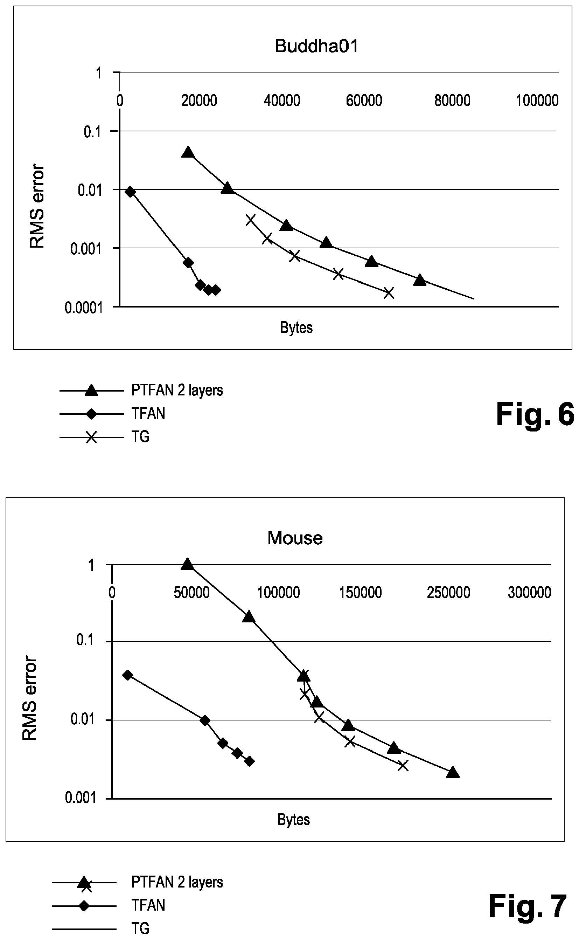

Les figures 6 et 7 illustrent des erreurs de position (en ordonnées) en fonction de la taille du flux binaire compressé (exprimé en octets) pour divers pas de quantifiation, et qui comparent trois méthodes de codage/décodage dont une méthode TG [Touma'98] la méthode TFAN [Mammou'09] et le présent procédé. Comme on le voit sur ces figures, un gain de 20 à 70% en termes de volume de données est obtenu par utilisation du procédé décrit par rapport aux techniques antérieures. Dans le cadre des exigences actuelles en termes de qualité et de bande passante, un tel gain est extrêmement significatif.

**Variantes de l'invention**

La portée de la présente invention ne se limite pas aux détails des formes de réalisation ci-dessus considérées à titre d'exemple, mais s'étend au contraire aux modifications à la portée de l'homme de l'art.

Le procédé précédemment décrit code en mono-résolution la connectivité du maillage original. Cela suppose que le décodeur doit reconstruire le maillage approximé $M^*$ en résolvant le système linéaire de taille (VxV) décrit par l'équation (2) (V étant le nombre de sommet de M). Le coût de calcul induit peut alors être prohibitif dans le cas de maillages denses et pour des terminaux à capacités limitées. Afin de pallier cette limitation, une extension possible consiste à introduire des niveaux de détails intermédiaires de connectivité comme illustré figure 9. Ici, des versions intermédiaires sont calculées par le codeur puis transmises progressivement en exploitant l'approche décrite plus haut. Dans la figure 9, trois niveaux de détails $M_0$, $M_1$ et $M_2$ sont considérés. La version la plus grossière $M_0$ (avec connectivité et géométrie) est tout d'abord transmise en exploitant directement le codeur mono-résolution TFAN [Mammou'09]. Les sommets de $M_0$ sont ensuite exploités afin de prédire la géométrie du niveau de détails suivant $M_1$. Plus précisément, les sommets de $M_0$ sont exploités comme points de contrôle pour $M_1$. Cela nécessite également l'envoi de la connectivité $C(1)$ de $M_1$ et d'une information auxiliaire, notée $Map(0 \rightarrow 1)$, qui décrit les correspondances entre les sommets de $M_0$ et de $M_1$. En exploitant $M_0$, $Map(0 \rightarrow 1)$ et $C(1)$, le décodeur calcule (comme décrit précédemment) une version approximée de $M_1$, notée $M_1^*$. $M_1^*$ est ensuite exploité comme prédicteur pour $M_1$. Les erreurs d'approximation prédites sont codées/décodées progressivement comme décrit dans l'approche originale. La même approche est ensuite exploitée afin de coder/décoder $M_2$ à partir de $M_1$.

**Revendications**

1. Procédé de codage de maillage tridimensionnel de points ou sommets connectés sous forme de facettes, délimitées par des arêtes, le maillage M étant défini par des données de connectivité T et des données de géométrie G,

   le procédé comportant :

   - une étape de codage sans perte des données de connectivité T, en information de connectivité encodée *Tc*,
   - une étape de génération itérative d'une hiérarchie de maillage progressif, c'est-à-dire un ensemble de maillages de niveaux de détails progressifs, PM*(M\*)*,
   - une étape de génération d'une approximation lisse par morceaux $M^*$ du maillage original $M$ à partir de la connectivité T du maillage, cette approximation lisse par morceaux $M^*$ étant décrite par :

      a. l'information de connectivité encodée *Tc*,
      b. un petit nombre N de points de contrôle $C = (c_k)_{k \in \{1,...,N\}}$ , préalablement définis,

         - la hiérarchie progressive de maillage, *PM(M\*)* étant utilisée pour calculer une prédiction des erreurs d'approximation de $M^*$ par rapport au maillage original $M$,
         **caractérisé en ce que** l'approximation lisse par morceaux $M^*$ est décrite également par :

      c. un ensemble d'indices, leurs références dans le maillage, S d'arêtes dites arêtes saillantes du maillage $M$, préalablement identifiées,

   **en ce que** le maillage approximé $M^*$ est généré selon une technique par laplacien, généralisée au cas de maillages comportant des arêtes saillantes, **en ce qu'**on définit une matrice laplacienne $L$ dans laquelle des poids $\alpha$ et $\beta$ sont respectivement associés aux arêtes spéciales, saillantes ou de bord, et aux arêtes non spéciales, permettant de pondérer de façons différentes la contribution des sommets voisins d'un point selon leur appartenance aux deux ensembles des voisins topologiques spéciaux $i_s^*$, définis comme partageant avec lui soit une arête de bord, soit une arête saillante, et des voisins topologiques normaux $i_n^*$, définis comme les voisins topologiques n'appartenant pas à $i_s^*$, $\alpha$ étant plus grand que $\beta$.

2. Procédé selon la revendication 1, **caractérisé en ce qu'**on choisit comme valeurs a=100 et $\beta$=1.

3. Procédé selon l'une quelconque des revendications précédentes, **caractérisé en ce que** la hiérarchie de maillage progressif PM*(M\*)*, est générée par décimation itérative du maillage approximé $M^*$ en n'autorisant que des opérations réversibles de contraction de demi-arêtes, jusqu'à aboutir à un maillage de base $M_0$, le maillage original $M$ étant alors construit comme le maillage de base $M_0$ associé à un ensemble d'opérations de raffinement par des divisions de sommets.

4. Encodeur (100) pour maillage tridimensionnel, **caractérisé en ce qu'**il comporte :

- des moyens de recevoir et de mémoriser :

- des données de connectivité T,
- des données de géométrie G,
- des références de "points de contrôle" Cs sélectionnées par l'utilisateur, ces points permettant de générer une version approximée du maillage original *M*, un sous-ensemble représentant 1% des sommets du maillage,

- un encodeur de connectivité (11) de type mono-résolution, c'est-à-dire sans évolutivité, adapté encoder sans perte les données de connectivité T, en données de connectivité compressées *Tc*,
- un module de quantification (12) destiné à traiter les données de géométrie G, de manière à réduire le volume d'informations à transmettre par sommet,
- un module de sélection de points de contrôle (13) utilisant les données de géométrie quantifiées $G_Q$, ainsi que les données de connectivité compressées *Tc* et les données de points de contrôle utilisateur Cs, pour fournir des points de contrôle sélectionnés C,
- un module de détection des arêtes saillantes (16) adapté à utiliser les données de connectivité compressées $T_C$ et les données de géométrie G,
- un module de binarisation (17) pour produire les indices des arêtes saillantes compressés $S_C$, et les indices et positions compressés des points de contrôle $C_C$,
- un module d'approximation de maillage (21) adapté à intégrer les données de points de contrôle sélectionnés C et de données de connectivité compressées *Tc,* ce module d'approximation de maillage (21) générant un maillage approximé *M\**, le maillage approximé *M\** étant généré selon une technique par laplacien, généralisée au cas de maillages comportant des arêtes saillantes, **en ce qu'**on définit une matrice laplacienne L dans laquelle des poids $\alpha$ et $\beta$ sont respectivement associés aux arêtes spéciales, saillantes ou de bord, et aux arêtes non spéciales, permettant de pondérer de façons différentes la contribution des sommets voisins d'un point selon leur appartenance aux deux ensembles des voisins topologiques spéciaux $i_s^*$, définis comme partageant avec lui soit une arête de bord, soit une arête saillante, et des voisins topologiques normaux $i_n^*$, définis comme les voisins topologiques n'appartenant pas à $i_s^*$, $\alpha$ étant plus grand que $\beta$,
- un module de décimation de maillage (22), adapté à fournir un maillage progressif PM*(M\*)* à partir du maillage approximé *M\** et les données de géométrie quantifiées Go,
- un module de prédiction (23) des erreurs d'approximation $e_v$, adapté à utiliser les données issues du module de décimation de maillage (22),

dont sont issues après compression par un encodeur arithmétique des données compressées de prédiction d'erreurs $e_{vc}$,
et des moyens de transmettre :

- des données de connectivité compressées *Tc,*
- des indices des arêtes saillantes compressés $S_C$,
- des indices et positions compressés des points de contrôle $C_C$,
- et des données compressées de prédiction d'erreurs $e_{vc}$.

5. Décodeur (200) pour maillage tridimensionnel, **caractérisé en ce qu'**il comporte :

- des moyens de recevoir et de mémoriser :

- des données de connectivité compressées *Tc,*
- des indices des arêtes saillantes compressés $S_C$,
- des indices et positions compressés des points de contrôle $C_C$,
- et des données compressées de prédiction d'erreurs $e_{vc}$,

- un décodeur de connectivité mono-résolution (31), adapté à fournir des données de connectivité reconstituées *T'*, à partir des données de connectivité compressées *Tc,*
- un module de binarisation inverse (37) adapté à fournir des indices des arêtes saillantes *S'*, des indices et positions des points de contrôle *C'*, et des données de prédiction d'erreurs de compression $e_v'$,
- un module d'approximation de maillage (41) adapté à combiner des données de connectivité reconstituées *T*, des indices d'arêtes saillantes *S'*, et et des indices et positions des points de contrôle C',
- un module de décimation de maillage (42) adapté à utiliser le maillage approximé *M\** pour obtenir un maillage progressif PM*(M\*)*, le maillage approximé *M\** étant généré selon une technique par laplacien, généralisée au cas de maillages comportant des arêtes saillantes, **en ce qu'**on définit une matrice laplacienne *L* dans laquelle des poids α et β sont respectivement associés aux arêtes spéciales, saillantes ou de bord, et aux arêtes non spéciales, permettant de pondérer de façons différentes la contribution des sommets voisins d'un point selon leur appartenance aux deux ensembles des voisins topologiques spéciaux $i_s{}^*$, définis comme partageant avec lui soit une arête de bord, soit une arête saillante, et des voisins topologiques normaux $i_n{}^*$, définis comme les voisins topologiques n'appartenant pas à $i_s{}^*$, α étant plus grand que β,
- un module de prédiction inverse d'erreurs d'approximation (43) adapté à combiner les données de maillage progressif PM*(M\*)* aux données de prédiction d'erreurs de compression $e_v'$,
- un module de quantification inverse (32) adapté à fournir, sur la base des résultats du module de prédiction inverse d'erreurs d'approximation, des données de géométrie reconstituées G'.

## Patentansprüche

1. Verfahren zur Kodierung eines dreidimensionalen Netzes von Punkten oder Scheitelpunkten, die in Form von Facetten verbunden sind und durch Kanten begrenzt werden, wobei das Netz *M* durch Konnektivitätsdaten T und Geometriedaten G definiert wird,

   das Verfahren umfasst:

   - einen Schritt des verlustfreien Kodierens der Konnektivitätsdaten T, in kodierte Konnektivitätsinformationen $T_c$,
   - einen Schritt zur iterativen Erzeugung einer progressiven Netzhierarchie, das heißt einer Menge von Netzen mit progressiven Detailebenen, PM*(M\*)*,
   - einen Schritt des Erzeugens einer stückweisen glatten Annäherung *M\** des ursprünglichen Netzes *M* aus der Konnektivität T des Netzes, wobei diese stückweise glatte Annäherung *M\** beschrieben wird durch:

       a. die kodierte Konnektivitätsinformation $T_c$,
       b. eine kleine Anzahl N von Kontrollpunkten C = $(C_k)_k$ ∈{1,..., N}, die vorab festgelegt wurden,

       - die progressive Netzhierarchie, wobei *PM(M\*)* zur Berechnung einer Voraussage der Annäherungsfehler von *M\** im Vergleich zum ursprünglichen Netz *M* verwendet wird,
       **dadurch gekennzeichnet, dass** die stückweise glatte Annäherung *M\** auch beschrieben wird durch:

       c. eine Reihe von Indizes, ihre Referenzen im Netz, *S* von zuvor identifizierten, sogenannten vorspringenden Kanten des Netzes *M*,

   dass das angenäherte Netz *M\** nach einer Laplace-Technik erzeugt wird, die auf den Fall von Netzen mit vorspringenden Kanten verallgemeinert ist, dass eine Laplace-Matrix L definiert wird, in der Gewichte α und β jeweils den speziellen, vorspringenden oder Randkanten zugeordnet sind, und nicht-speziellen Kanten, die es ermöglichen, den Beitrag der benachbarten Scheitelpunkte eines Punktes unterschiedlich zu gewichten, je nachdem, ob sie zu den beiden Mengen der speziellen topologischen Nachbarn $i_s{}^*$ gehören, definiert als mit ihm entweder eine Randkante oder eine hervorstehende Kante teilend, und der normalen topologischen Nachbarn $i_n{}^*$, definiert als die topologischen Nachbarn, die nicht zu $i_s{}^*$ gehören, wobei α größer ist als β.

2. Verfahren nach Anspruch 1, **dadurch gekennzeichnet, dass** als Werte α = 100 und β = 1 gewählt werden.

3. Verfahren nach einem der vorhergehenden Ansprüche, **dadurch gekennzeichnet, dass** die progressive Netzhierarchie PM*(M\*)*, durch iterative Dezimierung des angenäherten Netzes *M\** erzeugt wird, wobei nur reversible Operationen zur Halbkantenkontraktion zugelassen werden, bis ein Basisnetz $M_0$ erreicht wird, wobei das ursprüngliche Netz *M* dann als das Basisnetz $M_0$ konstruiert wird, das mit einer Reihe von Verfeinerungsoperationen durch Scheitelpunktteilungen verbunden ist.

**4.** Kodierer (100) für dreidimensionale Netze, **dadurch gekennzeichnet, dass** er Folgendes umfasst:

- Mittel zum Empfangen und Speichern:

  - Konnektivitätsdaten T,
  - Geometriedaten G,
  - vom Benutzer ausgewählte Referenzen von "Kontrollpunkten" Cs, wobei diese Punkte die Generierung einer angenäherten Version des ursprünglichen Netzes $M$ ermöglichen, wobei eine Teilmenge 1 % der Scheitelpunkte des Netzes darstellt,

- einen Konnektivitätskodierer (11) vom Typ Einzelauflösung, das heißt ohne Skalierbarkeit, der dazu geeignet ist, die Konnektivitätsdaten T verlustfrei in komprimierte Konnektivitätsdaten $T_c$ zu kodieren,
- ein Modul zur Quantifizierung (12) zur Verarbeitung der Geometriedaten G, um die Menge der pro Scheitelpunkt zu übertragenden Informationen zu verringern,
- ein Kontrollpunkt-Auswahlmodul (13), das die quantifizierten Geometriedaten $G_Q$ zusammen mit den komprimierten Konnektivitätsdaten $T_c$ und den Benutzer-Kontrollpunktdaten Cs verwendet, um ausgewählte Kontrollpunkte C bereitzustellen,
- ein Modul zur Ermittlung hervorstehender Kanten (16), das dazu geeignet ist, die komprimierten Konnektivitätsdaten $T_c$ und die Geometriedaten $G$ zu verwenden,
- ein Binarisierungsmodul (17) zum Erzeugen der komprimierten Indizes der hervorstehenden Kanten $S_c$, und der komprimierten Indizes und Positionen der Kontrollpunkte $C_c$,
- ein Netzannäherungsmodul (21), das dazu geeignet ist, die Daten ausgewählter Kontrollpunkte C und komprimierter Konnektivitätsdaten $T_c$ zu integrieren, wobei dieses Netzannäherungsmodul (21) ein angenähertes Netz $M^*$ erzeugt, wobei das angenäherte Netz $M^*$ nach einer Laplace-Technik erzeugt wird, die auf den Fall von Netzen mit vorspringenden Kanten verallgemeinert ist, indem eine Laplace-Matrix L definiert wird, in der Gewichte $\alpha$ und $\beta$ jeweils mit speziellen, vorspringenden oder Randkanten verknüpft sind, und mit nicht-speziellen Kanten, die es ermöglichen, den Beitrag der benachbarten Eckpunkte eines Punktes auf unterschiedliche Weise zu gewichten, je nachdem, ob sie zu den beiden Mengen der speziellen topologischen Nachbarn $i_s^*$ gehören, die so definiert sind, dass sie mit ihm entweder eine Randkante oder eine hervorstehende Kante teilen, und der normalen topologischen Nachbarn $in^*$ gehören, die so definiert sind, dass sie die topologischen Nachbarn sind, die nicht zu $i_s^*$ zählen, wobei $\alpha$ größer als $\beta$ ist,
- ein Netzdezimierungsmodul (22), das dazu ausgelegt ist, ein progressives Netz PM$(M^*)$ aus dem angenäherten Netz $M^*$ und den quantifizierten Geometriedaten GQ bereitzustellen,
- ein Modul (23) zur Voraussage von Annäherungsfehlern $e_v$, das dazu geeignet ist, die Daten aus dem Modul zur Dezimierung des Netzes (22) zu verwenden,

  aus denen nach Komprimierung durch einen arithmetischen Kodierer komprimierte Fehlervorhersagedaten $e_{vc}$ hervorgehen,
  und Mittel zur Übertragung:

  - komprimierte Konnektivitätsdaten $T_c$,
  - komprimierte Indizes der hervorstehenden Kanten $S_c$,
  - komprimierte Indizes und Positionen von Kontrollpunkten $C_c$,
  - und komprimierte Daten zur Fehlervorhersage $e_{vc}$.

**5.** Dekoder (200) für dreidimensionale Netze, **dadurch gekennzeichnet, dass** er Folgendes umfasst:

- Mittel zum Empfangen und Speichern:

  - komprimierte Konnektivitätsdaten $T_c$,
  - komprimierte Indizes der hervorstehenden Kanten $S_c$,
  - komprimierte Indizes und Positionen der Kontrollpunkte $C_c$,
  - und komprimierte Daten zur Fehlervorhersage $e_{vc}$,

- einen Einzelauflösungs-Konnektivitätsdekoder (31), der dazu geeignet ist, rekonstruierte Konnektivitätsdaten T' aus den komprimierten Konnektivitätsdaten $T_c$ bereitzustellen,
- ein Modul (37) zur inversen Binarisierung, das so ausgelegt ist, dass es Indizes der hervorstehenden Kanten S', Indizes und Positionen der Kontrollpunkte C' und Daten zur Voraussage von Komprimierungsfehlern $ev'$

liefert,
- ein Netz-Annäherungsmodul (41), das dazu geeignet ist, rekonstruierte Konnektivitätsdaten T', Indizes für hervorstehende Kanten S' und Indizes und Positionen von Kontrollpunkten C' zu kombinieren,
- ein Netzdezimierungsmodul (42), das dafür ausgelegt ist, das angenäherte Netz $M^*$ zu verwenden, um ein progressives Netz $PM(M^*)$ zu erhalten, wobei das angenäherte Netz $M^*$ gemäß einer Laplace-Technik erzeugt wird, die auf den Fall von Netzen mit vorspringenden Kanten verallgemeinert ist, durch die Bestimmung einer Laplace-Matrix L, in der Gewichte $\alpha$ und $\beta$ den speziellen, hervorstehenden oder Randkanten bzw. den nicht speziellen Kanten zugeordnet sind, die es ermöglichen, den Anteil der benachbarten Scheitelpunkte eines Punktes je nach ihrer Zugehörigkeit zu den beiden Mengen der speziellen topologischen Nachbarn $i_s^*$ auf unterschiedliche Weise zu gewichten, die als mit ihm entweder eine Randkante oder eine vorspringende Kante teilend definiert sind, und normale topologische Nachbarn $i_n^*$, die als die topologischen Nachbarn definiert sind, die nicht zu $i_s^*$ gehören, wobei $\alpha$ größer ist als $\beta$,
- ein Modul (43) zur inversen Annäherungsfehlervoraussage, das dazu geeignet ist, die progressiven Netzdaten $PM(M^*)$ mit den Kompressionsfehlervoraussagedaten $e_v'$ zu kombinieren,
- ein inverses Quantisierungsmodul (32), das dazu geeignet ist, auf der Grundlage der Ergebnisse des Moduls für die inverse Voraussage von Annäherungsfehlern rekonstruierte Geometriedaten G' zu liefern.

## Claims

1. Method for encoding three-dimensional meshes of dots or vertices connected in the form of facets delimited by edges; the mesh $M$ being defined by connectivity data T and geometry data G;

   the method comprising:

   - a step of lossless encoding of the connectivity data $T$ into encoded connectivity data $Tc$,
   - a step of iteratively generating a progressive mesh hierarchy, i.e. a set of meshes with progressive levels of detail, PM $(M^*)$,
   - a step of generating a piecewise smooth approximation $M^*$ of the original mesh $M$, from the mesh connectivity T; this piecewise smooth approximation $M^*$ being described by:

     a. the encoded connectivity information T$c$,
     b. a small number N of control dots $C =(c_k)k\in\{1,...,N\}$, previously defined,

       - the progressive mesh hierarchy $PM(M^*)$ being used to calculate a prediction of the approximation errors in $M^*$ compared with the original mesh $M$,
       **characterized in that** the piecewise smooth approximation $M^*$ is also described by:

     c. a set of indexes, their references in the mesh, $S$ of edges, called protruding edges of the mesh $M$, identified beforehand,

   **in that** the approximate mesh $M^*$ is generated according to a Laplacian technique, which has been generalized to the case of meshes comprising protruding edges, **in that** a Laplacian matrix L is defined in which weights $\alpha$ and $\beta$ are respectively associated with the special protruding or special outer edges and with the non-special edges, making it possible to assign different weights to the contribution of the vertices neighboring a dot depending their belonging to the two sets of special topological neighbors $i_s^*$, which are defined as sharing with same either an outer edge or a protruding edge, and normal topological neighbors $i_n^*$, defined as the topological neighbors not belonging to $i_s^*$, $\alpha$ being greater than $\beta$.

2. Method according to claim 1, **characterized in that** the following values are used: $\alpha$=100 and $\beta$=1.

3. Method according to any one of the preceding claims, **characterized in that** the progressive mesh hierarchy PM$(M^*)$, is generated by iterative decimation of the approximate mesh $M^*$ by allowing only reversible half-edge collapse operations until a base mesh $M_0$ is reached; the original mesh $M$ then being constructed as the base mesh $M_0$ associated with a set of operations of refining by vertex splitting.

4. Encoder (100) for three-dimensional meshes, **characterized in that** it comprises:

- means of receiving and storing:

- connectivity data T,
- geometry data G,
- references of user-selected "control dots" *Cs,* these dots making it possible to generate an approximate version of the original mesh *M,* a subset representing 1% of the vertices of the mesh,

- a mono-resolution type connectivity encoder (11), i.e. without scalability, configured for lossless encoding of the connectivity data T, into compressed connectivity data *Tc,*
- a quantization module (12) configured to process the geometry data G in order to reduce the volume of information to be transmitted per vertex,
- a control dot selection module (13) utilizing the quantized geometry data $G_Q$ and also the compressed connectivity data *Tc* and the user control dot data *Cs,* to provide the selected control dots C,
- a protruding edge detection module (16) configured to use the compressed connectivity data *Tc* and the geometry data G;
- a binarization module (17) to produce the compressed indexes of the protruding edges *Sc* and the compressed indexes and positions of the control dots *Cc,*
- a mesh approximation module (21) configured to integrate the selected control dot data C and compressed connectivity data *Tc,* this mesh approximation module (21) generating an approximate mesh *M\*,* the approximate mesh *M\** being generated according to a Laplacian technique, which has been generalized to the case of meshes comprising protruding edges, **in that** a Laplacian matrix L is defined in which weights $\alpha$ and $\beta$ are respectively associated with the special protruding or special outer edges and with the non-special edges, making it possible to assign different weights to the contribution of the vertices neighboring a dot depending their belonging to the two sets of special topological neighbors $i_s\*,$ which are defined as sharing with same either an outer edge or a protruding edge, and normal topological neighbors $i_n\*,$ defined as the topological neighbors not belonging to $i_s\*,$ $\alpha$ being greater than $\beta.$
- a mesh decimation module (22), configured to provide a progressive mesh PM*(M\*)* based on the approximate mesh *M\** and the quantized geometry data $G_Q;$
- a prediction module (23) for approximation errors $e_v$ configured to use the data output from the mesh decimation module (22)

from which compressed error prediction data $e_{vc}$ are output, after compression by an arithmetical encoder, and means of transmitting:

- compressed connectivity data *Tc,*
- compressed indexes of protruding edges *Sc,*
- compressed indexes and positions of the control dots *Cc,*
- and compressed error prediction data $e_{vc}.$

5. Decoder (200) for three-dimensional meshes, **characterized in that** it comprises:

- means of receiving and storing:

- compressed connectivity data *Tc,*
- compressed indexes of protruding edges *Sc,*
- compressed indexes and positions of the control dots *Cc,*
- and compressed error prediction data $e_{vc},$

- a mono-resolution connectivity decoder (31) configured to provide reconstituted connectivity data T' from the compressed connectivity data *Tc,*
- an inverse binarization module (37) configured to provide indexes of the protruding edges S', indexes and positions of the control dots C', and compression error prediction data $e_v',$
- a mesh approximation module (41) configured to combine reconstituted connectivity data T', indexes of protruding edges S' and indexes and positions of the control dots C',
- a mesh decimation module (42) configured to use the approximate mesh *M\** to obtain a progressive mesh PM(*M\**) the approximate mesh *M\** being generated according to a Laplacian technique, which has been generalized to the case of meshes comprising protruding edges, **in that** a Laplacian matrix L is defined in which weights $\alpha$ and $\beta$ are respectively associated with the special protruding or special outer edges and with the non-special edges, making it possible to assign different weights to the contribution of the vertices neighboring a dot depending their belonging to the two sets of special topological neighbors $i_s{}^*$, which are defined as sharing with same either an outer edge or a protruding edge, and normal topological neighbors $i_n{}^*$, defined as the topological neighbors not belonging to $i_s{}^*$, $\alpha$ being greater than $\beta$,
- an inverse approximation error prediction module (43) configured to combine the progressive mesh data PM$(M^*)$ with the compression error prediction data $e_v{}'$,
- an inverse quantization module (32) configured to provide reconstituted geometry data G' based on the results of the inverse approximation error prediction module.

**Fig. 1**

**Fig. 2**

**Fig. 3**

Fig. 4

Fig. 5

**Buddha01**

PTFAN 2 layers
TFAN
TG

**Fig. 6**

**Mouse**

PTFAN 2 layers
TFAN
TG

**Fig. 7**

Maillage original          Maillage approximé

◌ Barycentre

● Sommets voisins

✴ Sommet à décoder

Erreur de prédiction

**Fig. 8**

| M0 | C (1) | Map (0⟶1) | G (1, 1) | G (1, 2) | G (2, 3) | C (2) | Map (1⟶2) | G (2, 1) | G (2, 2) | G (2, 3) |

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HUGUES HOPPE.** Progressive meshes. *International Conférence on Computer Graphics and Interactive Techniques,* 1996, 99-108
- **G. TAUBIN ; A. GUÉZIEC ; W. HORN ; F. LAZARUS.** Progressive forest split compression. *International Conférence on Computer Graphics and Interactive Techniques,* 1998, 123-132
- **D. COHEN-OR ; D. LEVIN ; O. REMEZ.** Progressive Compression of Arbitrary Triangular Meshes. *IEEE Visualization Conférence Proceedings,* 1999, 67-72
- **P. ALLIEZ ; M. DESBRUN.** Progressive encoding for lossless transmission of 3D meshes. *ACM Siggraph Conférence Proceedings,* 2001, 198-205
- **J. PENG ; C.-C. J. KUO.** Geometry-guided progressive lossless 3D mesh coding with octree (OT) décomposition. *ACM Transactions on Graphics,* 2005, vol. 24 (3), 609-616
- **Z. KARNI ; C. GOTSMAN.** Spectral compression of mesh geometry. *International Conférence on Computer Graphics and Interactive Techniques,* 2000, 279-286
- **C.TOUMA ; C. GOTSMAN.** Triangle Mesh Compression. *International Conférence on Graphics Interface,* 1998, 24-34

- **K. MAMOU ; T. ZAHARIA ; F. PRÊTEUX.** TFAN: A low complexity 3D mesh compression algorithm. *Computer Animation and Virtual Worlds,* 2009, vol. 20 (2-3), 343-354
- **M. ZHIHONG et al.** A modified Laplacian Smoothing Approach with Mesh Saliency. *Smart Graphics, Lecture Notes in Computer Science,* 2006, vol. 4073, 105-113
- **H. ZHAO et al.** Triangular surface mesh fairing via Gaussian curvature flow. *Journal of Computationnal and Applied Mathematics,* 2006, vol. 195, 300-311
- **K. MAMOU et al.** PTFAN: a multi-resolution extension for the TFAN codec. *ISO/IEC JTC1/SC29/WG11,* 2010
- **D. CHEN ; D. COHEN-OR ; O. SORKINE ; S. TOLEDO.** Algebraic analysis of high-pass quantization. *ACM Transactions on Graphics,* 2005, vol. 24, 1259-1282
- **M. GARLAND ; P. HECKBERT.** Surface Simplification Using Quadric Error Metrics. *International Conférence on Computer Graphics and Interactive Techniques,* 1997, 209-216
- **J. POPOVIC ; H. HOPPE.** Progressive simplicial complexes. *ACM SIGGRAPH Conférence,* 1997, 217-224